# EUROPEAN PATENT SPECIFICATION

(11) **EP 3 526 879 B1**
(45) Date of publication and mention of the grant of the patent: **08.12.2021**
(21) Application number: 17797188.4
(22) Date of filing: 13.10.2017
(51) Int. Cl.: H02J 9/06, H02J 15/00, H02J 9/00, H02K 7/02

(54) **INDUSTRIAL PLANT**
INDUSTRIEANLAGE
INSTALLATION INDUSTRIELLE

(30) Priority: 14.10.2016 IT 201600103309
(43) Date of publication of application: 21.08.2019
(73) Proprietor: G.D S.p.A., 40133 Bologna (IT)
(72) Inventor: GIANESE, Giampaolo, 40037 Sasso Marconi (Bologna) (IT); CUPPINI, Michele, 40011 Anzola Emilia (Bologna) (IT); SARTONI, Massimo, 40139 Bologna (IT); FEDERICI, Luca, 40135 Bologna (IT)
(74) Representative: Puggioli, Tommaso
(86) International application number: PCT/IB2017/056357
(87) International publication number: WO 2018/069882

(56) References cited:
- CN-A- 102 013 754
- CN-A- 102 957 159
- JP-A- 2009 100 633
- US-A1- 2009 200 868

## Description

### Technical field

This invention relates to an industrial plant and, in particular, an industrial plant comprising automatic machines having a plurality of independent electrical axes, such as, for example, a plant for the production of cigarettes and similar products.

### Background art

Generally speaking, plants for the production of smoking articles such as cigarettes comprise a plurality of operating machines connected up to each other along a single production line.

A plant of this kind normally comprises a cigarette making machine or maker, a machine commonly known in the trade as "filter tip attachment" machine, a cigarette packer, a machine commonly known in the trade as "cellowrapper", a cartoning machine and, lastly, a case packer, used to pack a plurality of cartons in cases ready for shipment with the aid of a "palletizer" at the end of the line. Between one or more of these machines there may be a buffer which is variable in size in order to adapt to the different operating speeds of the machines; if necessary, the plant might also include a filter maker connected to the filter-tip attachment machine. All these machines comprise a plurality of electric drives working in synchrony according to predetermined laws through what have become known as "electric axes".

One disadvantage of plants of this kind is due to uncontrolled stopping of the machines in the event of a power failure.

Given the presence of independent electric axes, with or without mechanical interferences, a sudden power failure may result in damage to mechanical parts because the synchrony provided by the electric axes is lost.

Moreover, owing to the large amounts of material in motion when the plant is in operation, a sudden loss of power supply may cause some of the material to jam, leading to problems when the plant is subsequently restarted.

To overcomes these problems, modern industrial plants are normally provided with static uninterruptible power supplies which supply electrical power in known manner in emergency situations.

Very briefly, static uninterruptible power supplies comprise a battery of accumulators which are able to provide electric power for example until a self-contained power generator comes into operation or until the machines are properly shut down.

One disadvantage of plants equipped with static uninterruptible power supplies is due to the batteries which require specific storage and painstaking periodic maintenance.

Moreover, the batteries are very cumbersome, occupy a large amount of space and, in electrical terms, come in standard ratings which are ill adapted to specific plant requirements. JP2009100633 A discloses a UPS device comprising a flywheel, an electrical generator, and a power converter for connection to a DC power line. This prior art is reflected by the preamble of claim 1.

### Disclosure of the invention

In this context, the main purpose of this invention is to propose an industrial plant to overcome the above mentioned disadvantages.

The aim of this invention is to propose an industrial plant which allows the machines making up the plant to be brought to a controlled stop, even in the event of a power failure, and specifically in the presence of machines with electrical axes, to avoid jamming and/or damage to mechanical parts. Another aim of the invention is to propose an industrial plant which does not necessitate specific spaces and/o rooms for uninterruptible power supplies.

The technical purpose and aims specified are substantially achieved by an industrial plant according to claim 1. Embodiments of the invention are disclosed in the dependent claims.

### Brief description of the drawings

Further features and advantages of the invention are more apparent in the detailed description below, with reference to a preferred, non-limiting, embodiment of an industrial plant as illustrated in the accompanying drawings, in which:

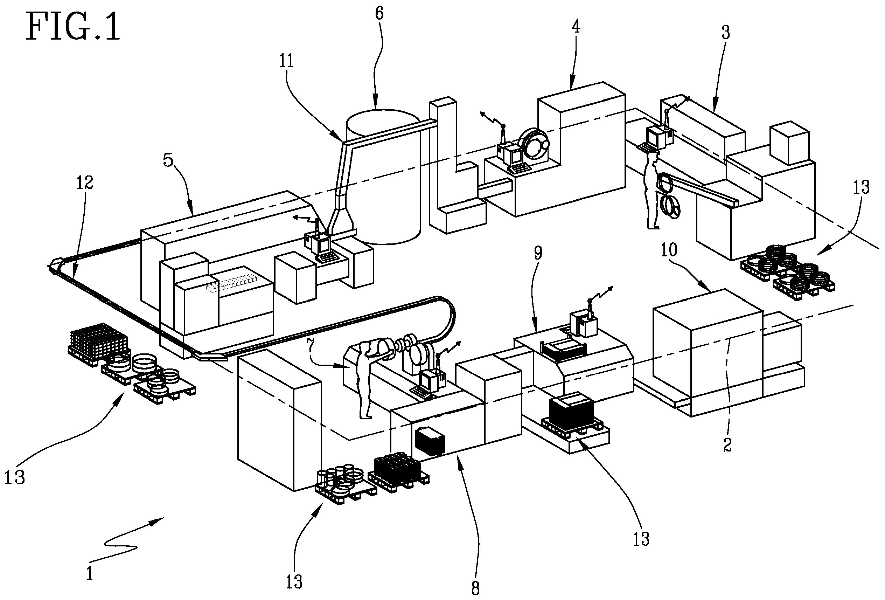

- Figure 1 is schematic perspective view, with some parts removed for greater clarity, illustrating an industrial plant, for example for making smoking articles;
- Figure 2 diagrammatically illustrates details of the plant of Figure 1, with some parts removed for greater clarity;
- Figure 3 diagrammatically illustrates details of the plant of Figure 1, with some parts removed for greater clarity;
- Figure 4 diagrammatically illustrates details of a plant according to the invention, with some parts removed for greater clarity.

### Detailed description of preferred embodiments of the invention

With reference to the accompanying drawings, the numeral 1 denotes an industrial plant according to this invention.

The preferred plant illustrated by way of an example is a plant for the production of smoking articles comprising a plurality of operating machines connected up to each other along a single production line 2.

The plant 1 comprises, upstream to downstream along the line 2, a cigarette making machine or maker 3, a filter tip attachment machine 4, a packing machine 5 connected to the filter tip attachment machine 4 with a buffer 6 between them, a cellowrapper 7, a cartoning machine 8 and a case packer 9 connected, at its outfeed end, to a palletizer 10.

The machines 3-9 are connected to each other along the line 2 by conveying devices including, in particular, the conveyor 11 connecting the filter tip attachment machine 4 to the packing machine 5 and the conveyor 12 between the packing machine 5 and the cellowrapper 7.

Next to each machine 3-9 there are respective platforms for accumulating the consumable materials such as, for example. rolls, blanks and the like; these platforms are all generically denoted by the numeral 13.

The machine 3-9 are of substantially known type and not described in detail herein.

The machines 3-9 include "critical loads" 14, that is to say, drives or devices operating in the plant 1 or in the respective machine 3-9 which must, in all events, be stopped or shut down in controlled and coordinated manner in order to avoid damage and/or product jamming.

A load is non critical, as for example in the case of a pump, a cooler, a conditioner, etc. which does not cause damage and/or jamming if stopped in an uncontrolled manner.

In brief and schematically, each critical load 14 comprises a dc/ac converter 15 and an electric motor 16, driven by the dc/ac converter 15, for moving corresponding mechanisms not illustrated.

The critical loads 14 may be "stand alone" or may even have the respective converters or drives grouped together in racks.

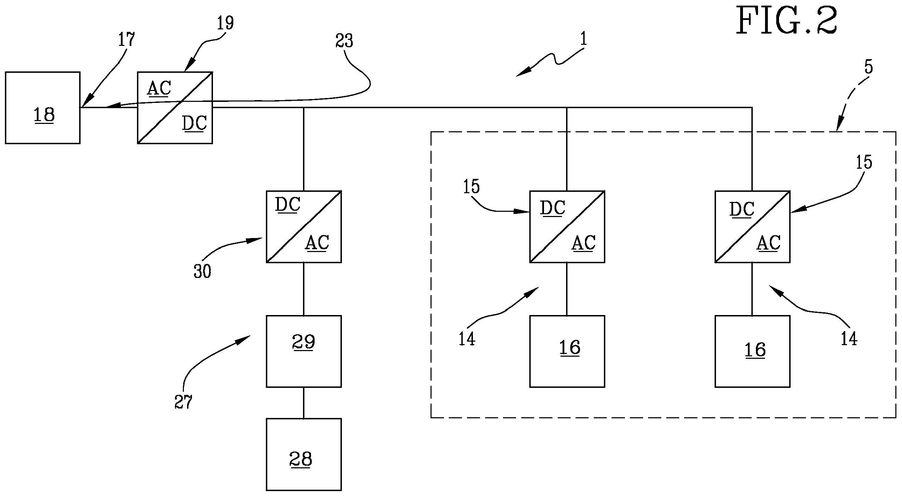

With reference in particular to Figures 2 to 4, in which the plant 1 is illustrated very schematically, attention is drawn to the following.

Figure 2 shows details of the plant 1, for example a section of the plant including the packing machine 5, only the critical loads 14 of which are diagrammatically illustrated.

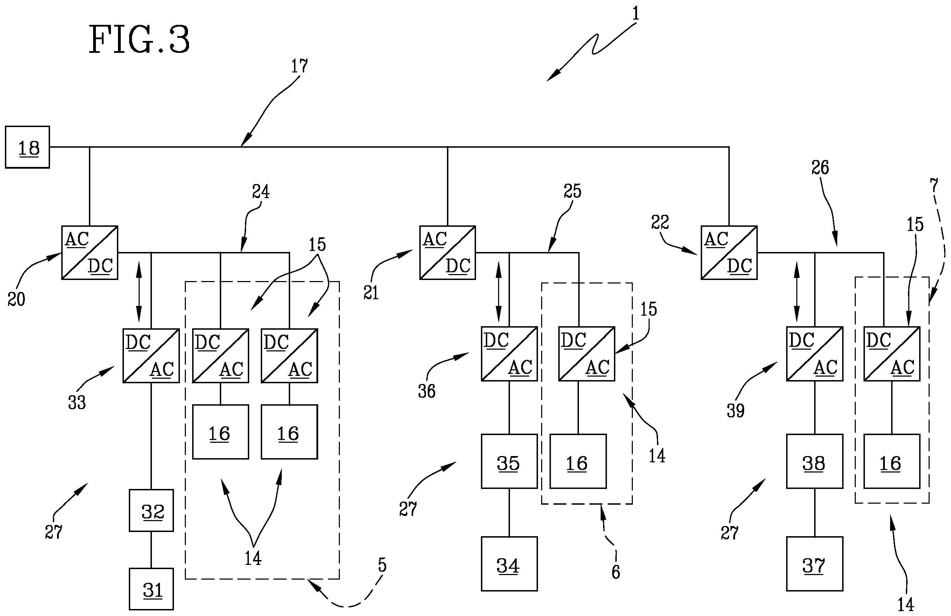

Figure 3 shows details of the plant 1, for example a section of the plant including a packing machine 5, a buffer 6 and a cellowrapper 7, only the critical loads 14 of which are diagrammatically illustrated.

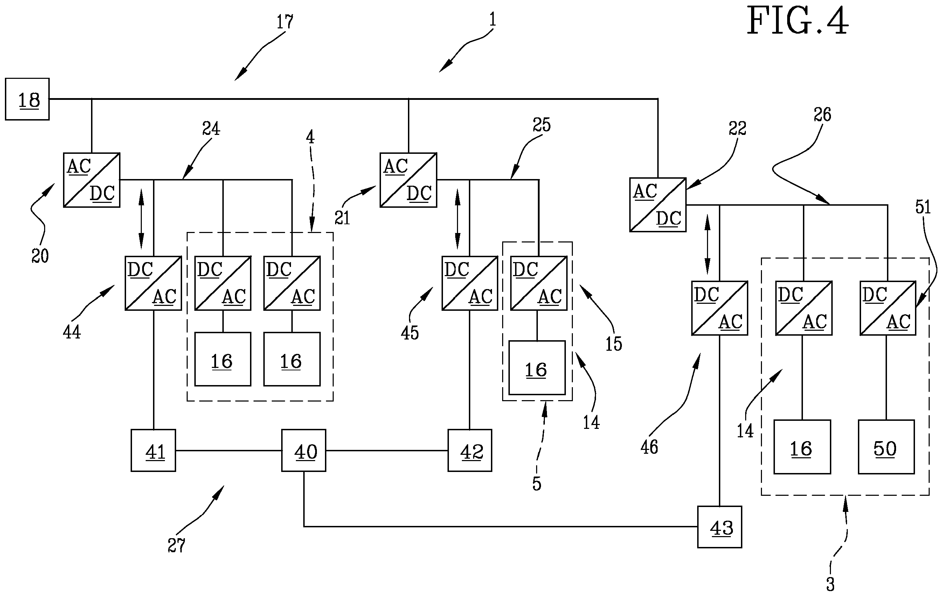

Figure 4 shows details of an embodiment according the invention, for example a section of the plant including a maker 3, a filter tip attachment machine 4 and a packing machine 5, diagrammatically illustrating only the critical loads 14 and a non-critical load 50, having a relatively high inertia, forming part of the cigarette maker 3, for example, and powered by a respective, two-way dc/ac converter 51.

The load 50, also referred to as inertial load, is a load which, in practice, acts like a flywheel, in particular in the case of a power failure.

For example, an inertial load 50 in a maker 3 is the cutting head normally provided, of substantially known type and not described in detail. The cutting head of the maker 3 is a low-friction, high rotation speed and high inertia load.

Further, the cutting head of the maker does not usually require energy to stop.

Generally speaking, the plant 1 comprises an alternating current power line 17 which can be connected to a power source 18 - for example the main electricity supply.

The plant 1 comprises at least one ac/dc converter 19, 20, 21, 22 in communication with the power source 18 through the alternating current power line 17 and at least one direct current power line 23, 24, 25, 26, or DC-bus, downstream of a respective ac/dc converter 19, 20, 21, 22, through which the aforementioned critical loads 14 and the load 50 are powered in the embodiment of Figure 4.

The plant 1 comprises at least one energy accumulation system 27 to come into operation in the event of an outage in the alternating current power line 17 and to power at least the critical loads 14 until the respective machine 3-9 comes to a stop.

Looking at the embodiment of Figure 2, the system 27 comprises an inertial uninterruptible power supply including a flywheel 28, an electric machine 29 connected to the flywheel, a two-way ac/dc converter 30 operatively interposed between the electric machine 29 and the direct current power line 23.

The electric machine 29 operates as a motor which sets the flywheel 28 in rotation when the alternating current power line 17 is in service and operating as a generator, driven by the inertia of the flywheel 28 when the alternating current power line 17 is out of service - due to a fault, for example.

The flywheel 28 is sized preferably as a function at least of the absorption of the critical load 14 and of the stopping time of the electric motor 29.

In practice, the embodiment of Figure 2 comprises a single flywheel 28 with the respective generator 29 and converter 30 both connected to the DC-bus 23 which powers the critical loads 14, that is, the machines - for example, the packing machine 5 powered by the bus 23.

With reference to Figure 3, the embodiment illustrated comprises, for example, a set of three ac/dc converters 20, 21, 22 powered by the three-phase line 17 and where the respective DC-buses 24, 25, 26 start.

In this system configuration, the critical loads 14 are powered individually or in groups by a respective direct current line 24, 25, 26.

For each DC-bus 24, 25, 26, the energy accumulation system 27 comprises a respective inertial uninterruptible power supply, including, respectively:
- a flywheel 31, an electric machine 32 connected to the flywheel 31, a two-way ac/dc converter 33 operatively interposed between the electric machine 32 and the direct current power line 24;
- a flywheel 34, an electric machine 35 connected to the flywheel 34, a two-way ac/dc converter 36 operatively interposed between the electric machine 35 and the direct current power line 25;
- a flywheel 37, an electric machine 38 connected to the flywheel 37, a two-way ac/dc converter 39 operatively interposed between the electric machine 38 and the direct current power line 26;

Each flywheel 31, 34, 37 is preferably sized as a function at least of the absorption of the critical loads 14 powered by the corresponding DC-bus 24, 25, 26.

Each flywheel 31, 34, 37 is preferably sized as a function of the stopping times of the respective critical loads 14 powered by the emergency power supply.

In practice, the embodiment of Figure 3 uses two or more inertia components or flywheels, independent of each other and each connected to a single group of drives 14; distinct generators and flywheels are used to power the DC-buses of different drive racks.

One advantage of this solution is the possibility of using the energy from the flywheels solely for the critical loads without particular modifications to the electrical system of the plant 1.

Further, the individual inertial units, suitably sized, are reduced in size.

In practice, this option allows increasing the energy accumulation capacity of the DC-bus of each group of drives. The mechanical energy is converted to electrical energy and channelled into the DC-bus of the single group of drives, to which only critical loads are preferably connected.

In a preferred embodiment not illustrated, dc/dc converters are connected to the DC-buses of the individual groups of drives to produce a 24V supply to power the electronic circuits of the drives.

With reference to Figure 4, the plant 1 illustrated is, excepting the accumulation system 27, similar to the one illustrated in Figure 3 and the same reference numerals are used to denote the corresponding technical features.

The accumulation system 27 involves the use of a single flywheel 40 and a plurality of electric machines 41, 42, 43, three in the example illustrated, connected to the flywheel 40 to power the DC-bus 24, 25, 26 of distinct loads 14 through respective, preferably two-way, ac/dc converters 44, 45, 46,.

One advantage of this solution lies in the possibility of using the energy from the flywheels solely for the critical loads without particular modifications to the electrical system and, above all, in having a single inertia component whose energy is shared by different groups of drives. This option allows the mechanical energy to be accumulated at a single point 40 but shared between the different groups of loads.

The flywheel 40 is connected to at least one electric machine 41, 42, 43 which acts as a motor to set the flywheel in rotation and as a generator to power the respective DC-bus, whilst the others need function only as generators to power the respective DC-buses.

In a preferred embodiment, all the electric machines 41, 42, 43 each act both as a motor and as a generator.

The flywheel 40 is preferably sized as a function of the total requirement of the distinct loads to be powered.

It is important to note that in the embodiment illustrated in Figure 4, any inertial loads 50 can, in the event of a power outage of the line 17, provide power for all the machines or sections of the plant connected to the common flywheel 40.

In effect, in the event of a power outage, the inertia of the load 50 contributes, through the dc/ac converter 51 and the dc/ac converter 46, to the powering of the electric machine 43 which, functioning as a motor, supplies the flywheel 40 with energy which sets the flywheel in rotation and which, through the flywheel itself, also powers the other machines connected thereto.

In the case of the example, the cutting head of the maker 3, in the event of a power outage, can supply the energy of its own inertia to the flywheel 40 and thus also to the cigarette maker 3 and to the packing machine 5, supported by the same flywheel 40.

In a preferred embodiment not illustrated, dc/dc converters are connected to the DC-buses of the individual groups of drives to produce a 24V supply to power the electronic circuits of the drives.

The invention as described solves the problem of uncontrolled stopping of the machines 3-9 in the event of a power failure. This problem is present in particular in machines with independent electric axes, with or without mechanical interferences.

The advantages lie in the possibility of avoiding damage to mechanical parts and/or lengthy restarting processes on account of jammed material. Other advantages are:
- dispensing with the need for batteries for energy accumulation, thereby reducing maintenance;
- reducing the overall dimensions of the energy accumulation system;
- optimizing the accumulation system linked to the specific sizing of the energy accumulation section which, in a preferred embodiment, is sized to guarantee stopping of the corresponding machine only;
- optimizing the energy accumulation system thanks to the possibility of transferring the energy not only from the accumulation system to the loads but also from the high inertia loads to the accumulation system (hence also from one machine/section to another). This is very important because a machine/section might have inertia loads which are themselves accumulators of energy which can be transferred to other machines/sections through the energy accumulating flywheel 40 common to all of the machines/sections.

## Claims

1. An industrial plant comprising an alternating current power line (17) connectable to a power source (18), at least a first ac/dc converter (19, 20) in communication with the power source (18) through the alternating current power line, a first direct current power line (23, 24) downstream of the ac/dc converter (19, 20), at least a first critical load (14) powered by the first direct current power line (23, 24), the first critical load (14) comprising at least a first dc/ac converter (15) and a first electric motor (16) driven by the first dc/ac converter (15), the plant comprising an energy accumulation system (27) to come into operation in the event of a fault in the alternating current power line (17), the accumulation system (27) comprises a first flywheel (28, 31, 40), a first electric machine (29, 32, 41) connected to the first flywheel (28, 31, 40), a first two-way ac/dc converter (30, 33, 44) operatively interposed between the first electric machine (29, 32, 41) and the first direct current power line (23, 24), the first electric machine (29, 32, 41) operating as a motor which sets the first flywheel (28, 31, 40) in rotation when the alternating current power line (17) is in service and operating as a generator, driven by the inertia of the first flywheel (28, 31, 40) when the alternating current power line (17) is out of service, the industrial plant being **characterized in that** it comprises a second ac/dc converter (21, 22) in communication with the power source (18) through the alternating current power line (17), a second direct current power line (25, 26) downstream of the second ac/dc converter (21, 22), at least one second critical load (14) powered by the direct current power line (25, 26), the energy accumulation system (27) comprising a second electric machine (42, 43) connected to the first flywheel (40), a second two-way ac/dc converter (45, 46) operatively interposed between the second electric machine (42, 43) and the second direct current power line (25, 26), the second electric machine (42, 43) operating as a generator, driven by the inertia of the first flywheel (40) when the alternating current power line (17) is out of service.

2. The industrial plant according to claim 1, comprising a third ac/dc converter (21, 22) in communication with the power source (18) through the alternating current power line (17), a third direct current power line (25, 26) downstream of the third ac/dc converter (21, 22), at least one third critical load (14) powered by the third direct current power line (25, 26), the energy accumulation system (27) comprising a second flywheel (34, 37), a third electric machine (35, 38) connected to the second flywheel (34, 37), a third two-way ac/dc converter (36, 39) operatively interposed between the third electric machine (35, 38) and the third direct current power line (25, 26), the third electric machine (35, 38) operating as a motor which sets the second flywheel (34, 37) in rotation when the alternating current power line (17) is in service and operating as a generator, driven by the inertia of the second flywheel (34, 37) when the alternating current power line (17) is out of service.

3. The plant according to claim 2, wherein the second flywheel (34, 37) is sized as a function at least of the absorption of the third critical load and of the stopping time of the third electric motor.

4. The plant according to claim 1, wherein the second electric machine (42, 43) operates as a motor which sets the first flywheel (40) in rotation when the alternating current power line is in service.

5. The plant according to claim 1 or 4, wherein the first flywheel (40) is sized as a function of the absorption of the first and second critical loads (14), connected to the first direct current power line (23, 24) and to the second direct current power line (25, 26), respectively, and of the stopping time of the first and second electric motors.

6. The plant according to claim 1, comprising at least one inertial load (50) and a fourth two-way ac/dc converter (51) for powering the inertial load (50) and operatively interposed between the second direct current power line (25, 26) and the inertial load (50).

## Patentansprüche

1. Industrieanlage, umfassend eine Wechselstromversorgungsleitung (17), die an eine Versorgungsquelle (18) anschließbar ist, mindestens einen ersten AC/DC-Wandler (19, 20) in Kommunikation mit der Versorgungsquelle (18) durch die Wechselstromversorgungsleitung, eine erste Gleichstromversorgungsleitung (23, 24) stromabwärts des AC/DC-Wandlers (19, 20), mindestens eine erste kritische Last (14), die durch die erste Gleichstromversorgungsleitung (23, 24) versorgt wird, wobei die erste kritische Last (14) mindestens einen ersten DC/AC-Wandler (15) und einen ersten Elektromotor (16) umfasst, der vom ersten DC/AC-Wandler (15) angetrieben wird, wobei die Anlage ein Energiespeichersystem (27) umfasst, das bei einem Fehler der Wechselstromversorgungsleitung (17) in Betrieb tritt, wobei das Speichersystem (27) ein erstes Schwungrad (28, 31, 40), eine erste elektrische Kraftmaschine (29, 32, 41), die mit dem ersten Schwungrad (28, 31, 40) verbunden ist, einen ersten Zweiwege-AC/DC-Wandler (30, 33, 44), der betriebswirksam zwischen der ersten elektrischen Kraftmaschine (29, 32, 41) und der ersten Gleichstromversorgungsleitung (23, 24) eingesetzt ist, umfasst, wobei die erste elektrische Kraftmaschine (29, 32, 41) als Motor arbeitet, der das erste Schwungrad (28, 31, 40) in Drehung versetzt, wenn die Wechselstromversorgungsleitung (17) in Betrieb ist, und als Generator arbeitet, angetrieben durch die Trägheit des ersten Schwungrads (28, 31, 40), wenn die Wechselstromversorgungsleitung (17) außer Betrieb ist, wobei die Industrieanlage **dadurch gekennzeichnet ist, dass** sie einen zweiten AC/DC-Wandler (21, 22) in Kommunikation mit der Versorgungsquelle (18) durch die Wechselstromversorgungsleitung (17), eine zweite Gleichstromversorgungsleitung (25, 26) stromabwärts des zweiten AC/DC-Wandlers (21, 22), mindestens eine zweite kritische Last (14), die durch die Gleichstromversorgungsleitung (25, 26) angetrieben wird, umfasst, wobei das Energiespeichersystem (27) eine zweite elektrische Kraftmaschine (42, 43) umfasst, die mit dem ersten Schwungrad (40) verbunden ist, einen zweiten Zweiwege-AC/DC-Wandler (45, 46), der betriebswirksam zwischen der zweiten elektrischen Kraftmaschine (42, 43) und der zweiten Gleichstromversorgungsleitung (25, 26) eingesetzt ist, wobei die zweite elektrische Kraftmaschine (42, 43) als Generator arbeitet, angetrieben durch die Trägheit des ersten Schwungrads (40), wenn die Wechselstromversorgungsleitung (17) außer Betrieb ist.

2. Industrieanlage nach Anspruch 1, umfassend einen dritten AC/DC-Wandler (21, 22) in Kommunikation mit der Versorgungsquelle (18) durch die Wechselstromversorgungsleitung (17), eine dritte Gleichstromversorgungsleitung (25, 26) stromabwärts des dritten AC/DC-Wandlers (21, 22), mindestens eine dritte kritische Last (14), die durch die dritte Gleichstromversorgungsleitung (25, 26) angetrieben wird, wobei das Energiespeichersystem (27) ein zweites Schwungrad (34, 37), eine dritte elektrische Kraftmaschine (35, 38), die mit dem zweiten Schwungrad (34, 37) verbunden ist, einen dritten Zweiwege-AC/DC-Wandler (36, 39), der betriebswirksam zwischen der dritten elektrischen Kraftmaschine (35, 38) und der dritten Gleichstromversorgungslinie (25, 26) eingesetzt ist, umfasst, wobei die dritte elektrische Kraftmaschine (35, 38) als Motor arbeitet, der das zweite Schwungrad (34, 37) in Drehung versetzt, wenn die Wechselstromversorgungsleitung (17) in Betrieb ist, und als Generator arbeitet, angetrieben durch die Trägheit des zweiten Schwungrads (34, 37), wenn die Wechselstromversorgungsleitung (17) außer Betrieb ist.

3. Anlage nach Anspruch 2, wobei das zweite Schwungrad (34, 37) als eine Funktion von mindestens der Aufnahme der dritten kritischen Last und der Stoppzeit des dritten Elektromotors bemessen ist.

4. Anlage nach Anspruch 1, wobei die zweite elektrische Kraftmaschine (42, 43) als Motor arbeitet, der das erste Schwungrad (40) in Drehung versetzt, wenn die Wechselstromversorgungsleitung in Betrieb ist.

5. Anlage nach Anspruch 1 oder 4, wobei das erste Schwungrad (40) als eine Funktion der Aufnahme der ersten und der zweiten kritischen Last (14) bemessen ist, verbunden jeweils mit der ersten Gleichstromversorgungsleitung (23, 24) und der zweiten Gleichstromversorgungsleitung (25, 26), sowie der Stoppzeit des ersten und zweiten Elektromotors.

6. Anlage nach Anspruch 1, umfassend mindestens eine Trägheitslast (50) und einen vierten Zweiwege-AC/DC-Wandler (51) zur Versorgung der Trägheitslast (50), und betriebswirksam eingesetzt zwischen der zweiten Gleichstromversorgungsleitung (25, 26) und der Trägheitslast (50).

## Revendications

1. Installation industrielle comprenant une ligne d'alimentation en courant alternatif (17) pouvant être connectée à une source d'alimentation (18), au moins un premier convertisseur ca/cc (19, 20) en communication avec la source d'alimentation (18) par l'intermédiaire de la ligne d'alimentation en courant alternatif, une première ligne d'alimentation en courant continu (23, 24) en aval du convertisseur ca/cc (19, 20), au moins une première charge critique (14) alimentée par la première ligne d'alimentation en courant continu (23, 24), la première charge critique (14) comprenant au moins un premier convertisseur cc/ca (15) et un premier moteur électrique (16) entraîné par le premier convertisseur cc/ca (15), l'installation comprenant un système d'accumulation d'énergie (27) pour entrer en fonctionnement dans le cas d'un défaut dans la ligne électrique à courant alternatif (17), le système d'accumulation (27) comprend un premier volant d'inertie (28, 31, 40), une première machine électrique (29, 32, 41) connectée au premier volant d'inertie (28, 31, 40), un premier convertisseur ca/cc à deux voies (30, 33, 44) interposé de manière opérationnelle entre la première machine électrique (29, 32, 41) et la première ligne électrique à courant continu (23, 24), la première machine électrique (29, 32, 41) fonctionnant comme un moteur qui met le premier volant d'inertie (28, 31, 40) en rotation lorsque la ligne électrique à courant alternatif (17) est en service et fonctionnant comme un générateur, entraîné par l'inertie du premier volant d'inertie (28, 31, 40) lorsque la ligne électrique à courant alternatif (17) est hors service, l'installation industrielle étant **caractérisée en ce qu'**elle comprend un deuxième convertisseur ca/cc (21, 22) en communication avec la source d'énergie (18) par l'intermédiaire de la ligne d'énergie en courant alternatif (17), une deuxième ligne d'énergie en courant continu (25, 26) en aval du deuxième convertisseur ca/cc (21, 22), au moins une deuxième charge critique (14) alimentée par la ligne d'alimentation en courant continu (25, 26), le système d'accumulation d'énergie (27) comprenant une deuxième machine électrique (42, 43) connectée au premier volant d'inertie (40), un deuxième convertisseur ca/cc bidirectionnel (45, 46) interposé de manière opérationnelle entre la seconde machine électrique (42, 43) et la seconde ligne d'alimentation en courant continu (25, 26), la seconde machine électrique (42, 43) fonctionnant comme un générateur, entraîné par l'inertie du premier volant d'inertie (40) lorsque la ligne d'alimentation en courant alternatif (17) est hors service.

2. Installation industrielle selon la revendication 1, comprenant un troisième convertisseur ca/cc (21, 22) en communication avec la source d'énergie (18) par l'intermédiaire de la ligne d'énergie en courant alternatif (17), une troisième ligne d'énergie en courant continu (25, 26) en aval du troisième convertisseur ca/cc (21, 22), au moins une troisième charge critique (14) alimentée par la troisième ligne d'énergie en courant continu (25, 26), le système d'accumulation d'énergie (27) comprenant un deuxième volant d'inertie (34, 37), une troisième machine électrique (35, 38) connectée au deuxième volant d'inertie (34, 37), un troisième convertisseur ca/cc bidirectionnel (36, 39) interposé de manière opérationnelle entre la troisième machine électrique (35, 38) et la troisième ligne d'alimentation en courant continu (25, 26), la troisième machine électrique (35, 38) fonctionnant comme un moteur qui met le deuxième volant d'inertie (34, 37) en rotation lorsque la ligne d'alimentation en courant alternatif (17) est en service et fonctionnant comme un générateur, entraîné par l'inertie du deuxième volant d'inertie (34, 37) lorsque la ligne d'alimentation en courant alternatif (17) est hors service.

3. Installation selon la revendication 2, dans laquelle le deuxième volant d'inertie (34, 37) est dimensionné en fonction au moins de l'absorption de la troisième charge critique et du temps d'arrêt du troisième moteur électrique.

4. Installation selon la revendication 1, dans laquelle la deuxième machine électrique (42, 43) fonctionne comme un moteur qui met le premier volant d'inertie (40) en rotation lorsque la ligne électrique à courant alternatif est en service.

5. Installation selon la revendication 1 ou 4, dans laquelle le premier volant d'inertie (40) est dimensionné en fonction de l'absorption des première et deuxième charges critiques (14), connectées respectivement à la première ligne électrique à courant continu (23, 24) et à la deuxième ligne électrique à courant continu (25, 26), et du temps d'arrêt des premier et deuxième moteurs électriques.

6. Installation selon la revendication 1, comprenant au moins une charge inertielle (50) et un quatrième convertisseur ca/cc à deux voies (51) pour alimenter la charge inertielle (50) et interposé de manière opérationnelle entre la deuxième ligne d'alimentation en courant continu (25, 26) et la charge inertielle (50).
